# EUROPÄISCHE PATENTANMELDUNG

(11) **EP 2 465 723 A2**
(43) Veröffentlichungstag der Anmeldung: **20.06.2012**
(21) Anmeldenummer: 11193622.5
(22) Anmeldetag: 14.12.2011
(51) Int. Cl.: B60N 2/44

(54) **Folienblase, Aktor sowie Fahrzeugsitz**

(30) Priorität: 14.12.2010 DE 102010054487
(71) Anmelder: Alfmeier Präzision AG Baugruppen und Systemlösungen, 91757 Treuchtlingen (DE)
(72) Erfinder: Beyerlein, Wolfgang, 91734 Mitteleschenbach (DE); Fürnrohr, Wolfgang, 86657 Bissingen (DE); Blohm, Norbert, 91781 Weissenburg (DE)
(74) Vertreter: Mörtel & Höfner

(57) **Zusammenfassung**

Eine Folienblase (1), insbesondere für einen Fahrzeugsitz, weist eine obere und eine untere Folienwandung (OF, UF) sowie mindestens eine Längsschweißnaht (5) auf. Die obere und die untere Folienwandung (OF, UF) liegen im kollabierten Einbauzustand der Folienblase (1) aneinander und formen ein Flachgebilde, das durch Längsseitenränder (13) seitlich begrenzt ist. Die Längsschweißnaht (5a, 5c) der Folienblase (1) ist in einem Folienbereich (FB) zwischen den beiden Längsseitenrändern (13) der Folienblase (1) vorgesehen.

## Beschreibung

Die Erfindung betrifft eine Folienblase, insbesondere für einen Fahrzeugsitz, mit einer oberen und einer unteren Folienwandung sowie mit mindestens einer Längsschweißnaht, wobei die obere und die untere Folienwandung im kollabierten Einbauzustand der Folienblase aneinanderliegen und ein Flachgebilde formen, das durch Längsseitenränder seitlich begrenzt ist.

Z.B. bei nahezu allen, auf pneumatischen Prinzipien beruhenden, Komfortsystemen in Sitzen, insbesondere in Fahrzeugsitzen, kommen als Aktoren für eine Konturverstellung des Sitzes Luftsäcke bzw. Luftblasen, im Folgenden kurz Blasen genannt, zum Einsatz. Herkömmlicherweise bestehen solche Blasen aus zwei dünnen Kunststofffolien bzw. Zuschnitten von Kunststofffolien, beispielsweise mit einer Dicke von 0,3 bis 0,5 mm, insbesondere aus TPU (thermoplastisches Polyurethan). Durch Füllen und Entleeren solcher Folienblasen können verschiedene Funktionen im Sitz realisiert werden. Dazu gehören beispielsweise Lordosenanwendungen, Seitenhalte in Lehne bzw. Rückenfläche und Sitzfläche des jeweiligen Sitzes, Sitztiefeneinstellung, Massagesysteme sowie ggf. auch Linearantriebe, die insbesondere jeweils durch einen Blasenstapel, d.h. durch eine Aneinanderreihung von Blasen bereitgestellt sein können.

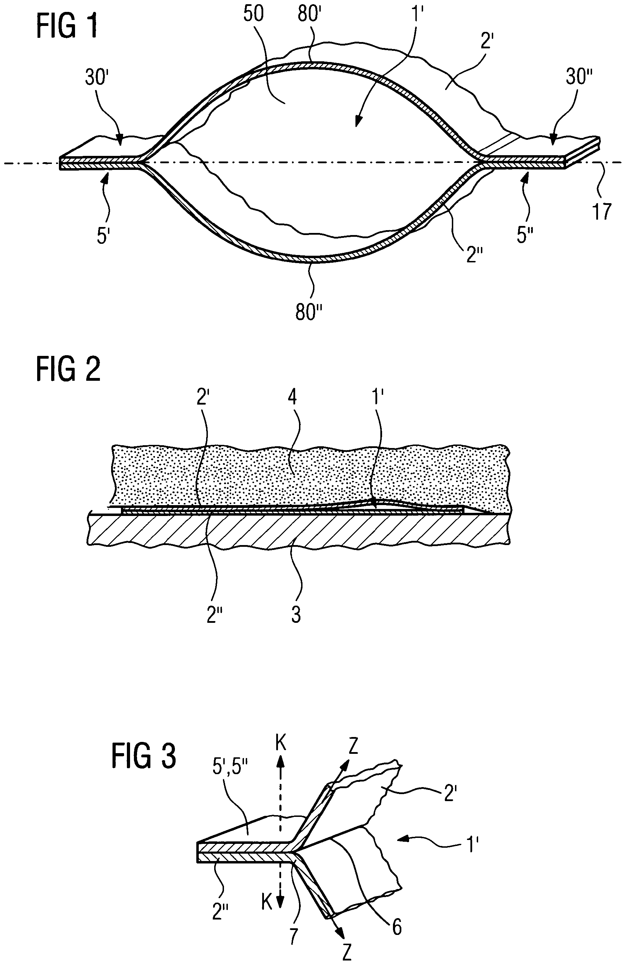

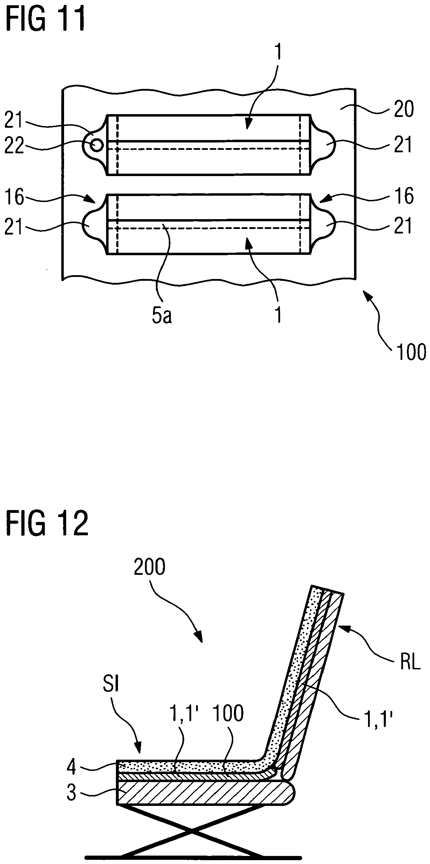

Eine Folienblase 1 liegt im fertigen Einbauzustand beispielsweise integriert in einem Sitzteil SI (siehe Figur 12) und/oder einer Rückenlehne RL eines Fahrzeugsitzes 200 an einer Tragstruktur 3 im entlüfteten, d.h. kollabierten Zustand mehr oder weniger flach an (Fig. 2). Auf ihrer der Tragstruktur 3 abgewandten Seite ist die Blase 1 von einem Polstermaterial 4 umschlossen. Die Blase 1 ist also zwischen zwei Sitzstrukturen 3, 4 des Fahrzeugsitzes 200 angeordnet. Wird die Blase 1 mit Luft befüllt, vergrößert sie, wie etwa in Fig. 1 dargestellt, ihr Volumen, wobei das Polstermaterial 4 von der Tragstruktur 3 weg bewegt wird. Je nach Anwendungsfall wird die Blase mit einem Innendruck von bis zu 500 hPa beaufschlagt. Zur Herstellung einer Blase wie z.B. 1 werden herkömmlicher Weise zwei ebene Kunststofffolien- Zuschnitte 2', 2" etwa gleicher Geometrieform, wie z.B. mit im Wesentlichen gleicher Rechtecksform, sich weitgehend einander deckend übereinander gelegt. An ihren beiden äußeren, d.h. linksseitigen sowie rechtsseitigen Längsseitenrandzonen 30', 30 " sind sie jeweils, vorzugsweise durch ein Hochfrequenzschweißverfahren, unter Bildung einer Längsschweißnaht 5', 5" miteinander verbunden. Somit weist die Folienblase 1 zwei Längsschweißnähte 5', 5 " an ihren beiden äußeren Längsseitenrändern 30', 30" auf, während zwischen diesen ihre beiden übereinander angeordneten Kunststofffolien-Zuschnitte bzw. Folienwandungen 2', 2" unverbunden und somit relativ zueinander beweglich sind. Im entleerten Zustand der Folienblase 1 liegen deren beiden Kunststofffolien-Zuschnitte 2', 2" im Wesentlichen kongruent aufeinander und berühren sich. Zwischen den miteinander in Längsrichtung der Folienblase 1 verschweißten, äußeren Längsseitenrandzonen 30', 30" der beiden Kunststofffolien- Zuschnitte 2', 2" ist somit ein Abschnitt 80' des ersten Kunststofffolien-Zuschnitts 2' und ein Abschnitt 80" des zweiten Kunststofffolien- Zuschnitts 2" derart beweglich angeordnet, dass sich diese beim Einblasen von Luft in den Innenraum 50 der Folienblase 1' aufbauchen, d.h. jeweils eine nach außen gewölbte Form einnehmen. Im aufgeblasenen Zustand der Folienblase 1' stehen die linksseitige sowie rechtsseitige Längsseitenrandzone 30', 30" der Folienblase 1' gegenüber deren Bauchbereich seitlich in eine gemeinsame Planebene 17 nach außen hin ab. Dabei wird dann vor allen Dingen die jeweilige Längsschweißnaht 5', 5" belastet. Im aufgeblasenen Zustand üben die sich an die jeweilige Schweißnaht 5', 5" anschließenden Folienabschnitte 80', 80" der Kunststofffolien-Zuschnitte 2', 2" eine Zugkraft Z aus, welche die jeweilige Schweißnaht 5', 5" hauptsächlich im Bereich der Verbindungslinie 6, an der die beiden Kunststofffolien 2', 2" vom Inneren 50 der Folienblase 1' her betrachtet in den jeweiligen Schweißnahtbereich übergehen, belasten. Dabei ergibt sich eine etwa rechtwinklig zur Planebene 17 der jeweiligen Schweißnaht 5', 5 " erstreckende Kraftkomponente K. Dies führt auf Dauer zu einem Auftrennen bzw. Aufschälen der jeweiligen Schweißnaht 5', 5 " oder zu einem Bruch der Kunststofffolien- Zuschnitte 2', 2 " im Übergangsbereich 7 zwischen ihren Längsseitenrandzonen 30', 30 " und den freien, durch Lufteinlassen und Luftauslassen beweglichen Abschnitten 80', 80 " der beiden Kunststofffolien-Zuschnitte 2', 2", insbesondere bei dynamischen Anwendungen, bei denen häufige Verformungs- bzw. Hubzyklen auftreten. So kann die jeweilige Folienblase z.B. bei einem Massagesystem eines Fahrzeugsitzes zwischen 100.000 und 1.000.000 Hubwechseln über die Lebensdauer des Fahrzeugsitzes gesehen ausgesetzt sein. Die Dauerbiegebeanspruchung wirkt auf die jeweilige Schweißnaht aufschälend, d.h. der Innendruck der jeweiligen Luftbefüllung im Innenraum 50 der aufgeblasenen Folienblase 1' versucht, die miteinander verschweißten Längsseitenrandzonen wie z.B. 30', 30" der beiden Kunststofffolien- Zuschnitte 2', 2" wieder voneinander zu trennen. Es kommt zu einer mechanisch ungünstigen Linienlast auf die innere Schweißkonturkante 6 (vom Innenraum 50 der Folienblase 1' her betrachtet)der jeweils zwei miteinander verschweißten Längsseitenrandzonen 30', 30". Das Auftrennen der jeweiligen Schweißnaht 5', 5" oder ein Bruch der Kunststofffolien 2', 2" im Übergangsbereich 7 führt zu einer Undichtigkeit der Blase 1'.

Der Erfindung liegt die Aufgabe zugrunde, eine Folienblase bereitzustellen, die über eine für sie geforderte Lebensdauer auftretende Beanspruchungen, insbesondere einer stationären Belastung hervorgerufen z.B. durch eine andauernde Luftbefüllung, oder dynamischen Belastungen hervorgerufen z.B. durch eine Vielzahl von Wechseln zwischen Luftbefüllungen und Luftentleerungen, verbessert aushält.

Diese Aufgabe wird erfindungsgemäß bei einer Folienblase der eingangs genannten Art dadurch gelöst, dass die Längsschweißnaht der Folienblase in einem Folienbereich zwischen den beiden Längsseitenrändern der Folienblase vorgesehen ist.

Auf diese Weise ist eine Folienblase bereitgestellt, die hohen Belastungsanforderungen, insbesondere Biege-, Zug- und/oder Scherbeanspruchungen, standhält, wie sie beispielsweise bereits bei stationärer Belastung durch fortdauernde Luftbefüllung, oder vor allem bei wechselnden Belastungen bei dynamischen Anwendungen mit einer hohen Anzahl von Füll- und Entleerungsvorgängen und damit einhergehenden Biegezyklen auftreten. Eine erfindungsgemäß ausgebildete Folienblase, damit einhergehend ein mit mindestens einer derartigen Folienblase ausgestatteter Aktor, sowie ein Fahrzeugsitz mit mindestens einer erfindungsgemäß ausgebildeten Folienblase oder mit mindestens einem solchen, erfindungsgemäß ausgebildeten Aktor bleiben somit unter einer Vielzahl von Gegebenheiten langlebig funktionstüchtig.

Bei der erfindungsgemäß ausgebildeten Folienblase liegen deren obere und untere Folienwandung im kollabierten Einbauzustand der Folienblase aneinander und formen ein Flachgebilde, das durch Längsseitenränder seitlich begrenzt ist. Zwischen diesen beiden Längsseitenrändern ist die jeweilige Längsschweißnaht in einem Folienabschnitt der Folienblase angeordnet, der im entleerten Zustand der Folienblase weitgehend lose an dem ihm gegenüberliegenden Folienabschnitt der Folienblase flach anliegt und beim Aufblasen der Folienblase gegenüber diesem relativ beweglich ist. Würde die Längsschweißnaht hingegen an einem Längsseitenrand der Folienblase angeordnet sein, so würde dies eine vollständige Abflachung der Folienblase im entleerten Zustand behindern. Außerdem wäre eine an einem Längsseitenrand angeordnete Längsschweißnaht im Aufblaszustand und/oder vor allem beim Wechsel zwischen Auffüllen und Entleeren der Folienblase unzulässig hohen Biege-, Zug-, und/oder Scherbeanspruchungen der Folienblase ausgesetzt, wie dies vorstehend zu dem Ausführungsbeispiel einer herkömmlich ausgebildeten Folienblase der Figuren 1, 2, 3 erläutert ist.

Dadurch, dass die jeweilige Längsschweißnaht der erfindungsgemäßen Folienblase zwischen deren beiden Längsseitenrändern in einem Folienbereich vorgesehen ist, in dem sich die Folienblase beim Befüllen mit Luft, oder einem sonstigen Füllmedium, insbesondere Füllgas, aufweitet und beim Entleeren abflacht, und nicht an einem Längsseitenrand der Folienblase, ist in zuverlässiger Weise ein Auftrennen der Längsschweißnaht oder ein Bruch der ein oder mehreren Kunststofffolien der Folienblase, insbesondere im Übergangsbereich zwischen der Längsschweißnaht und den sich an die Längsschweißnaht anschließenden Abschnitten der Kunststofffolie und/oder im Bereich der beiden Längsseitenränder der Folienblase über die gewünschte Soll-Betriebslebensdauer der Folienblase vermieden. Es ist somit eine Folienblase bereitgestellt, die auch nach häufigen Verformungs- bzw. Hubzyklen zuverlässig luftdicht bleibt. Die Längsschweißnaht liegt bei der erfindungsgemäßen Lösung also nicht mehr in demjenigen Bereich der Folienblase, an dem beim Durchlaufen eines Hubes der Blase durch Lufteinlassen und nachfolgendes Luftauslassen die maximal an der Folienblase wirksam werdenden Biege-, Zugspannungs-, und/oder Scherkräfte auftreten, die zu einem Abschälen der durch die Schweißnaht miteinander verbundenen Folienenden führen könnten, sondern außerhalb dieses Bereichs. Beim Einbau einer erfindungsgemäßen Folienblase oder insbesondere einer Vielzahl von erfindungsgemäß ausgebildeten Folienblasen in einen Sitz, insbesondere Fahrzeugsitz, kann somit sichergestellt werden, dass die jeweilige Folienblase über die geforderte Betriebslebensdauer des Sitzes funktionstüchtig bleibt und einwandfrei arbeitet.

Gemäß einer zweckmäßigen Weiterbildung der Erfindung formt die Folienblase im aufgeblasenen Einbauzustand ein langgestrecktes, röhrenartiges Gebilde, insbesondere flachtunnelartiges Gebilde, oder sie nimmt eine im Wesentlichen abgeflachte Geometrieform wie z.B. quaderförmige, zylinderförmige, oder kegelige Hohlkörperform ein. Mit anderen Worten ausgedrückt ist die jeweilige Folienblase zweckmäßigerweise derart ausgebildet, dass die lichte Breite zwischen ihren beiden Längsseitenrändern größer als die lichte Höhe ihres Innenraums ist. Wenn die Längsschweißnaht zwischen den beiden Längsseitenrändern der Folienblase platziert ist, die die Ortsbereiche größter Biegung bzw. Krümmung entlang dem Konturverlauf der Folienblase betrachtet in deren aufgeblasenem Zustand sind, ist sie im abgeflachten Bereich der Folienblase vorgesehen und somit weit weniger oder zumindest keinen unzulässig großen Biege-, Zug-, und/oder Scherbeanspruchungen ausgesetzt. Dadurch ist die Haltbarkeit der Längsschweißnaht auf einfache Weise sichergestellt.

Insbesondere kann es zweckmäßig sein, wenn die jeweilige Längsschweißnaht etwa im Mittenbereich der oberen Folienwandung und/oder unteren Folienwandung zwischen den beiden Längsseitenrändern der Folienblase vorgesehen ist. Dort ist die Folienblase im Aufblaszustand in vorteilhafter Weise am flachsten gegenüber ihren sonstigen Mantelflächen ausgebildet, so dass weitgehend vermieden ist, dass unzulässige Biege-, Zug-, und/oder Scherbeanspruchungen an der Längsschweißnaht angreifen können.

Gemäß einer vorteilhaften Weiterbildung der Erfindung ist die Längsschweißnaht derart ausgebildet und angeordnet, dass beim Befüllen der Folienblase mit Luft eine Zugkraft, die von den sich an die Längsschweißnaht anschließenden Abschnitten der Kunststofffolie der Folienblase auf deren Längsschweißnaht ausgeübt ist, in eine Richtung wirkt, die im Wesentlichen parallel zu der von der Längsschweißnaht aufgespannten Planebene verläuft. Dadurch ist eine Auftrennung der miteinander verschweißten Folienenden der Folienblase im Bereich der Schweißnaht weitgehend vermieden.

Dabei kann die Folienblase vorzugsweise aus einer einzigen Kunststofffolie oder ggf. auch aus zwei Kunststofffolien gebildet sein, die jeweils zwei Folienenden aufweisen.

Insbesondere kann es zweckmäßig sein, wenn die Längsschweißnaht dadurch gebildet ist, dass die beiden gegenüberliegende Folienenden einer Kunststofffolie oder zweier Kunststofffolien mit ihren Innenseiten aneinander verschweißt sind, und dass die Längsschweißnaht derart umgeklappt ist, dass sie sich entlang der Außenseite der Kunststofffolie erstreckt. Durch das Umlegen der Längsschweißnaht derart, dass diese der Außenkontur der aufgeblasenen Folienblase nachfolgt, sind Zugkräfte senkrecht zur Schweißnaht, die zu einem unerwünschten Auftrennen der dort miteinander verschweißten Folienenden der Folienblase führen könnten, weitgehend vermieden.

Besonders vorteilhaft kann es sein, wenn zwischen den zwei Folienenden einer Kunststofffolie oder zweier Kunststofffolien eine Längsschweißnaht dadurch gebildet ist, dass die dem Innenraum der Folienblase zugewandte Innenseite des einen Folienendes auf die dem Innenraum der Folienblase abgewandte Außenseite des anderen Folienendes aufgelegt und im Überlappungsbereich der beiden Folienenden eine Verschweißung vorgenommen ist. Durch diese bündige Überlappung der Folienenden folgt die Schweißnaht dem Konturverlauf der aufgeblasenen Folienblase nach, so dass Zugkräfte senkrecht zur Schweißnaht, die zu einem unerwünschten Auftrennen der dort miteinander verschweißten Folienenden der Folienblase führen könnten, weitgehend vermieden sind.

Im Fall, dass eine erste Längsschweißnaht in der oberen, zwischen den beiden Längsseitenrändern der Folienblase liegenden Folienwandung der Folienblase und eine zweite Längsschweißnaht in der unteren, zwischen den beiden Längsseitenrändern der Folienblase liegenden Folienwandung der Folienblase vorgesehen ist, kann es zweckmäßig sein, wenn die erste Längsschweißnaht gegenüber der zweiten Längsschweißnaht lateral bzw. seitlich versetzt ist. Dadurch sitzen die beiden Längschweißnähte im entleerten Zustand der Folienblase nicht aufeinander, so dass deren Beschädigung z.B. durch Abriebeffekte weitgehend vermieden ist.

Nach einer weiteren vorteilhaften Weiterbildung der Erfindung sind die sich quer zur Längserstreckung der Folienblase erstreckenden Stirnenden der Folienblase unter Bildung einer Schweißnaht miteinander verschweißt. Dadurch ergibt sich ein rundum geschlossener Hohlkörper für die jeweilige Folienblase.

Zweckmäßig kann es sein, wenn an den Stirnenden der jeweiligen Folienblase Fixierlaschen angeformt sind. Dadurch lässt sich eine Vielzahl von Folienblasen fertigungstechnisch einfach an einer Trägerfolie befestigen und als Einheit z.B. in einem Fahrzeugsitz montieren.

Die Erfindung betrifft auch einen Aktor mit einer Folienblase oder einer Vielzahl von Folienblasen, die jeweils nach dem erfindungsgemäßen Konstruktionsprinzip ausgebildet sind. Ein vorteilhafter Aktor kann beispielsweise dadurch gebildet sein, dass eine oder mehrere Folienblasen auf einer Trägerfolie befestigt ist oder sind.

Ferner betrifft die Erfindung insbesondere einen Fahrzeugsitz mit mindestens einem erfindungsgemäßen Aktor. Der Aktor kann dabei insbesondere ein Massagesystem, eine Lordosenstütze, Seitenhalte in Lehne und Sitzfläche, eine Sitztiefeneinstellung, und/oder einen Linearantrieb bereitstellen. Dazu kann es vorteilhaft sein, wenn der Aktor mit einer oder mehreren Folienblasen zwischen einer ersten und einer zweiten Sitzstruktur des Fahrzeugsitzes angeordnet ist.

Sonstige vorteilhafte Weiterbildungen der Erfindung sind in den Unteransprüchen wiedergegeben.

Die Erfindung und ihre vorteilhaften Weiterbildungen sowie deren Vorteile werden nachfolgend anhand von Zeichnungen näher erläutert.

Es zeigen jeweils in schematischer Darstellung oder Prinzipskizze.
- Figur 1: eine Folienblase herkömmlicher Bauart im aufgeblasenen Zustand, bei der zwei zugeschnittene Kunststofffolien an ihren beiden Seitenrändern plan aufliegen und dort miteinander verschweißt sind,
- Figur 2: die Folienblase von Figur 1 im entleerten, d.h. kollabiertem Zustand,
- Figur 3: im Detail eine Schweißnaht im Bereich eines Längsseitenrands der Folienblase von Figur 1,
- Figur 4: ein erstes vorteilhaftes Ausführungsbeispiel einer erfindungsgemäß ausgebildeten Folienblase in einer Schnittansicht quer zu deren Längserstreckung betrachtet,
- Figur 5: ein zweites vorteilhaftes Ausführungsbeispiel einer erfindungsgemäß ausgebildeten Folienblase in einer Schnittansicht quer zu deren Längserstreckung betrachtet,
- Figur 6: im Detail eine Schweißnaht der Folienblase von Figur 4,
- Figuren 7, 8: in schematischer Draufsicht verschiedene vorteilhafte Geometrieformen einer nach dem erfindungsgemäßen Konstruktionsprinzip hergestellten Folienblase,
- Figur 9: ein drittes vorteilhaftes Ausführungsbeispiel einer erfindungsgemäß ausgebildeten Folienblase in einer Schnittansicht quer zu deren Längserstreckung betrachtet,
- Figur 10: in perspektivischer Darstellung von oben betrachtet die Folienblase von Figur 9 im Bereich eines stirnseitigen Endes,
- Figur 11: in Draufsichtsdarstellung eine Trägerfolie mit mehreren erfindungsgemäß ausgebildeten Folienblasen, und
- Figur 12: in schematischer Seitenansicht einen Fahrzeugsitz, der einen Aktor mit erfindungsgemäß ausgebildeten Folienblasen aufweist.

In den Figuren 1 - 12 sind nur diejenigen Bestandteile einer Folienblase mit Bezugszeichen versehen und erläutert, welche für das Verständnis der Erfindung erforderlich sind. Ansonsten sind Elemente mit gleicher Funktion und Wirkungsweise in den Figuren 1 - 12 jeweils mit denselben Bezugszeichen versehen.

Um eine Folienblase gegenüber mechanischen Belastungen, die auf sie z.B. aufgrund ihrer jeweiligen Luftbefüllung wirken, robuster bzw. widerstandsfähiger zu machen, ist die Längsschweißnaht der Folienblase in einem Folienbereich zwischen den beiden Längsseitenrändern der Folienblase vorgesehen. Dabei weist die Folienblase eine obere und einer untere Folienwandung auf, die im kollabierten Einbauzustand der Folienblase aneinanderliegen und ein Flachgebilde formen, das durch Längsseitenränder seitlich begrenzt ist.

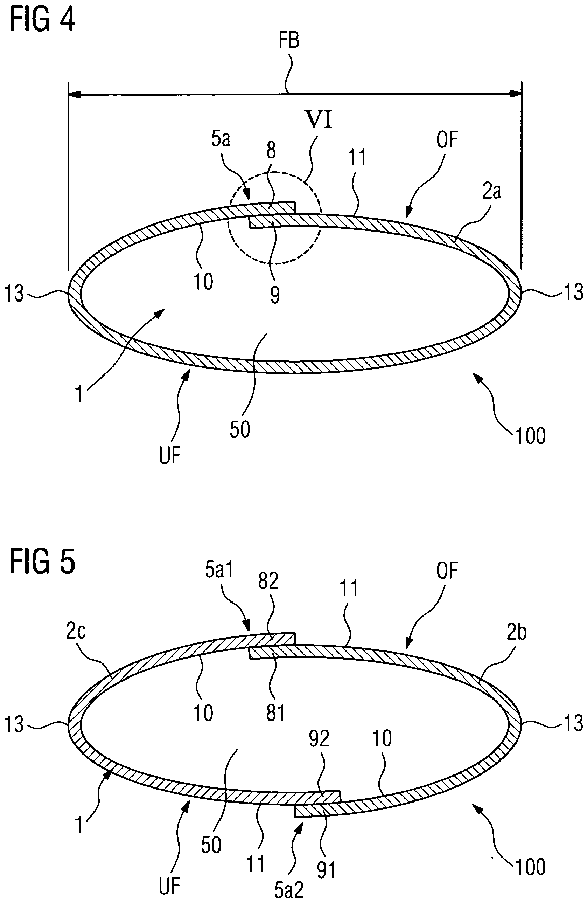

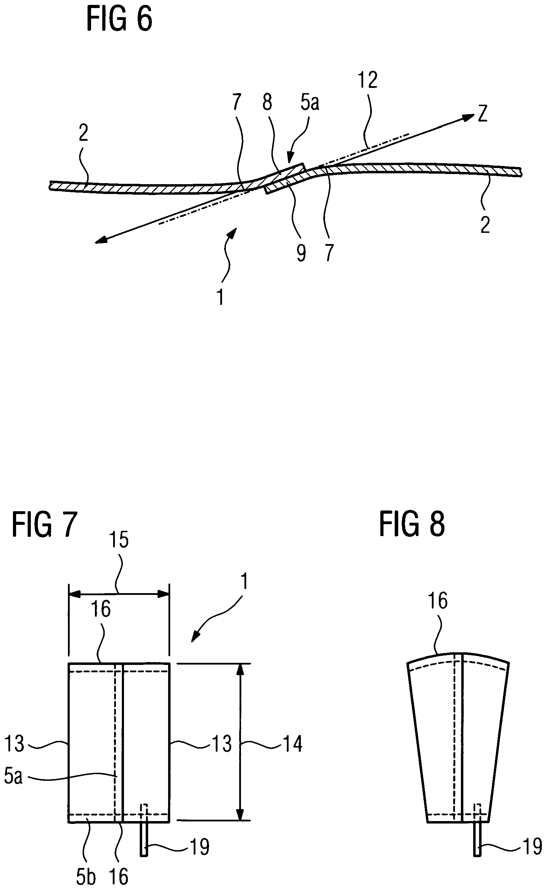

Eine erste vorteilhafte Ausführungsvariante für eine Folienblase 1 mit einer derartigen erfindungsgemäßen Ausgestaltung veranschaulichen die Figuren 4 und 6. Dort weist die Folienblase im Aufblaszustand räumlich betrachtet eine abgeflachte Zylinderform auf. Quer zu ihrer Längserstreckung betrachtet ist sie annäherungsweise ellipsenartig geformt. Bei der in den Figuren 4 und 6 gezeigten Ausführungsvariante wird im Bereich FB zwischen den beiden Längsseitenrändern 13 der Folienblase 1 eine Längsschweißnaht 5a zwischen zwei Folienenden 8,9 einer einzelnen Kunststofffolie 2a gebildet, indem die dem Blaseninnenraum 50 zugewandte Innenseite 10 des einen Folienendes 8 auf die dem Blaseninnenraum abgewandte Außenseite 11 des anderen Folienendes 9 aufgelegt und im Überlappungsbereich eine Verschweißung vorgenommen wird. Wie in der Darstellung von Figur 6, dem Ausschnitt VI von Figur 4, angedeutet ist, wirkt die Zugkraft Z der sich an die Längsschweißnaht 5a anschließenden Abschnitte der Kunststofffolie 2a auf die Längsschweißnaht 5a in eine Richtung, die im Wesentlichen parallel zu der von der Längsschweißnaht 5a aufgespannten Planebene 12 verläuft. Die Folge ist, dass selbst bei mit Luft oder sonstigem Füllgas oder Füllmedium vollgefüllter bzw. aufgeblasener Folienblase 1 eine Krafteinleitung in die Längsschweißnaht senkrecht von deren Planebene 12 weg nach außen, wie in der Figur 3 gezeigt, nicht auftritt oder vernachlässigbar ist, so dass weder die in der Längsschweißnaht 5a überlappenden Folienenden 8,9 auseinandergetrennt noch eine Biegebeanspruchung der Übergangsbereiche 7 in der beim Stand der Technik auftretenden Form vorliegt.

Eine Folienblase 1 mit einer Längsschweißnaht 5a der oben beschriebenen Art kann entsprechend der Figur 4 vorteilhafter Weise aus einer einzigen Kunststofffolie 2a hergestellt werden, indem sich gegenüberliegende Folienenden 8,9 der Kunststofffolie 2a auf die beschriebene Art und Weise bündig überlappt und miteinander verbunden werden, insbesondere durch eine Hochfrequenzverschweißung. Durch die bündige Überlappung der beiden Folienenden 8, 9 ist zwischen diesen eine Kontaktfläche 12 gebildet, die der Kontur der Folienenden 8, 9 sowie der sich an die Folienenden 8, 9 anschließenden Folienabschnitte im Aufblaszustand der Folienblase weitgehend nachfolgt. Wenn die Folienblase 1 mit Luft oder einem sonstigen Füllmedium gefüllt ist, wird dadurch die Kontaktfläche 12 lediglich mit einer Zugkraft beaufschlagt, die im Bereich der Kontaktfläche 12 der Längsschweißnaht 5a im Wesentlichen mit einer tangentialen Kraftkomponente an den Folienenden 8, 9 angreift und von deren Stirnseiten weggerichtet ist. Die Längsschweißnaht 5a ist vorzugsweise in einem Folienbereich wie z.B. hier an der oberen Folienwandung OF der Kunststofffolie 2a angeordnet, der im entleerten Einbauzustand der Folienblase 1 flach an dem ihm gegenüberliegenden Folienbereich wie z.B. hier der unteren Folienwandung UF der Kunststofffolie 2a anliegt. Würde eine Längsschweißnaht 5a an einem Längsseitenrand 13 der Folienblase 1 angeordnet werden, würde dies eine vollständige Abflachung der Folienblase 1 im entleerten Zustand behindern. Außerdem wäre eine an einem Längsseitenrand 13 angeordnete Längsschweißnaht 5a einer ständigen Biegebeanspruchung beim Befüllen und Entleeren der Folienblase 1 ausgesetzt.

Vorteilhafter Weise ist die Längsschweißnaht 5a etwa im Mittenbereich der oberen Folienwandung OF zwischen dem linksseitigen und rechtsseitigen Längsseitenrand 13 der Folienblase 1 vorgesehen. Dadurch ist sie an einer Stelle positioniert, bei der die gemeinsame Kontaktfläche 12 zwischen der sich überlappenden Innenseite 10 des radial äußeren Folienendes 8 und der Außenseite 11 des radial inneren Folienendes 9 im Wesentlichen parallel zur mittigen Abflachungsebene der oberen Folienwandung OF im Aufblaszustand der Folienblase 1 verläuft. Dadurch sind unzulässige Zugbeanspruchungen senkrecht zur Kontaktfläche 12, die zu einem Aufschälen bzw. Auftrennen der beiden Folienenden 8, 9 führen könnten, weitgehend vermieden.

Alternativ kann die Längsschweißnaht 5a in analoger Weise auch an der unteren Folienwandung UF angebracht sein.

Bevorzugt ist die überlappende Längsschweißnaht 5a insbesondere auf derjenigen Folienwandung angebracht, die der Befestigung der Folienblase wie z.B. an einer Trägerfolie dient. Da dann diese Folienwandung an einer Anlagefläche anliegt, dort festgehalten oder an dieser befestigt ist, kann eine senkrecht zur Kontaktfläche 12 der Längsschweißnaht 5a wirkende Auftrennkraft, die von der Anlagefläche wegzeigt, teilweise oder ganz abgefangen oder kompensiert werden, so dass einem Auftrennen der Folienenden 8, 9 zusätzlich entgegengewirkt ist.

Bei dem in der Figur 5 gezeigten weiteren vorteilhaften Ausführungsbeispiel ist die Blase 1 aus zwei Kunststofffolien 2b, 2c gebildet. Sie weist daher zwei der oben beschriebenen Längsschweißnähte 5a auf. Diese sind in der Figur 5 mit 5a1, 5a2 bezeichnet. Die beiden Schweißnähte 5a1, 5a2 können seitlich versetzt angeordnet sein, so dass sie im entleerten Zustand der Blase 1 nicht aufeinander liegen. In einem oberen Bereich ist die erste Längsschweißnaht 5a1 zwischen einem ersten Folienende 81 der ersten Kunststofffolie 2b und einem ersten Folienende 82 der zweiten Kunststofffolie 2c dadurch gebildet, dass die dem Innenraum 50 der Folienblase 1 zugewandte Innenseite 10 des ersten Folienendes 82 der zweiten Kunststofffolie 2c auf die dem Innenraum 50 der Folienblase 1 abgewandte Außenseite 11 des ersten Folienendes 81 der ersten Kunststofffolie 2b aufgelegt und im Überlappungsbereich dieser beiden ersten Folienenden 81, 82 eine Verschweißung vorgenommen ist. Analog dazu ist in einem unteren Bereich die zweite Längsschweißnaht 5a2 zwischen einem zweiten Folienende 91 der ersten Kunststofffolie 2b und einem zweiten Folienende 92 der zweiten Kunststofffolie 2c dadurch gebildet, dass die dem Innenraum 50 der Folienblase 1 zugewandte Innenseite 10 des zweiten Folienendes 91 der ersten Kunststofffolie 2b auf die dem Innenraum 50 der Folienblase 1 abgewandte Außenseite 11 des zweiten Folienendes 92 der zweiten Kunststofffolie 2c aufgelegt und im Überlappungsbereich dieser beiden zweiten Folienenden 91, 92 eine Verschweißung vorgenommen ist.

Folienblasen der hier in Rede stehenden Art sind üblicherweise langgestreckte Gebilde, d.h. sie weisen eine Länge 14 auf, die größer ist als ihre Breite 15 (Figur 7). Die Längsschweißnaht 5a erstreckt sich dabei im Wesentlichen in der Längsrichtung der Folienblase 1. Die sich dazu quer erstreckenden Stirnenden 16 der Blase 1 sind auf herkömmliche Weise, wie weiter oben beschrieben, an einer Schweißnaht 5b miteinander verschweißt. Die in der Schweißnaht 5b miteinander verbundenen Folienbereiche erstrecken sich in der Planebene 17 (Figur 1) der Blase 1. Die Stirnenden 16 können geradlinig verlaufen, wie in Fig. 7 gezeigt, oder auch einen gebogenen Verlauf, etwa entsprechend Fig. 8, aufweisen.

Zweckmäßigerweise formt die jeweilige Folienblase im aufgeblasenen Einbauzustand ein langgestrecktes, röhrenartiges Gebilde, insbesondere flachtunnelartiges Gebilde, oder sie nimmt eine im Wesentlichen abgeflachte quaderförmige, zylinderförmige, oder kegelige Hohlkörperform ein. Wenn die Längsschweißnaht im abgeflachten Bereich zwischen den beiden Längsseitenrändern angebracht ist, sind somit unzulässige Auftrenn- Zugspannungen senkrecht zu Schweißnaht und/oder Biegebeanspruchungen im Bereich der Schweißnaht weitgehend vermieden. Dadurch sind unzulässige Beanspruchungen der Schweißnaht weitgehend vermieden.

Verallgemeinert betrachtet ist somit eine Folienblase, insbesondere für einen Fahrzeugsitz, bereitgestellt, die eine obere und eine untere Folienwandung aufweist. Die obere und die untere Folienwandung liegen im kollabierten Einbauzustand der Folienblase aneinander und formen ein Flachgebilde, das durch Längsseitenränder seitlich begrenzt ist. Die jeweilige Längsschweißnaht der Folienblase ist dann erfindungsgemäß im Bereich, insbesondere etwa im Mittenbereich, zwischen diesen beiden Längsseitenrändern an der oberen und/oder unteren Folienwandung vorgesehen. Auf diese Weise ist die jeweilige Längsschweißnaht außerhalb der Bereiche der Längsseitenränder positioniert, die von allen Bereichen der aufgeblasenen Folienblase der stärksten Biegung und damit einhergehend Zugspannung (in Verlaufsrichtung der Kunststofffolie) ausgesetzt sind. Durch die Anordnung der jeweiligen Längsschweißnaht im weniger gebogenen Zwischenbereich der Folienblase zwischen deren beiden Längsseitenrändern ist die Längsschweißnaht im Aufblaszustand der Folienblase mit geringeren Biege-, Zug-, und/oder Schälkräften, die zu einem Auftrennen der Längsschweißnaht führen könnten, beaufschlagt als dies im Bereich der Längsseitenränder der Fall wäre.

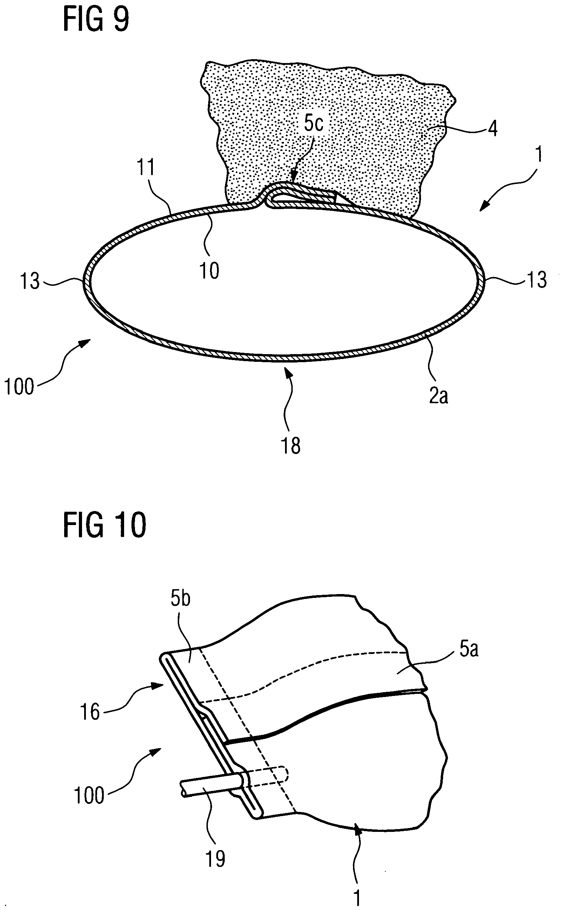

Bei einer anderen vorteilhaften Ausgestaltung (siehe Figur 9) der erfindungsgemäß ausgebildeten Folienblase ist die Schweißnaht auf herkömmliche Weise, wie oben beschrieben (Figuren 1 bis 3), gebildet. Im Falle einer aus nur einer Kunststofffolie 2a gebildeten Blase werden gegenüberliegende Folienenden 8, 9 eines Folienzuschnittes mit ihren Innenseiten 10 aneinander verschweißt. Die entsprechende Schweißnaht 5c bildet jedoch nicht den Seitenrand 13 der Blase, sondern ist an einem zwischen den Seitenrändern 13 liegenden Bereich der Blase 1 angeordnet. Die Schweißnaht 5c ist derart umgeklappt, dass sie sich entlang der Außenseite 11 der Kunststofffolie 2a erstreckt. Aufgrund eines die Blase 1 umhüllenden Polstermaterials 4 wird die Schweißnaht 5c in dieser Position, auch im aufgeblasenen Zustand (siehe Figur 9) gehalten.

Denkbar ist auch, dass an der der Tragstruktur 3 zugewandten Seite der Blase 1, an einer Stelle 18, eine Schweißnaht 5c vorgesehen ist, d.h. in diesem Falle wird die Blase 1 aus zwei Kunststofffolien gebildet. Die Fixierung der Schweißnaht 5c in ihrem seitlich umgeklappten Zustand kann auch durch eine Verklebung oder Verschweißung mit der Außenseite 11 der Kunststofffolie 2a erfolgen.

Die Zuführung einer der Be- und Entlüftung dienenden Leitung 19 erfolgt über die Schweißnaht 5b der Stirnenden 16, die auf herkömmliche Weise miteinander verschweißt sind.

Vielfach ist in einem Sitz, insbesondere Fahrzeugsitz, ein Ensemble von mehreren Blasen 1 gewünscht. Um in einem solchen Fall nicht einzelne Blasen im Sitz montieren und an der Tragstruktur in einer bestimmten Lage und Ausrichtung fixieren zu müssen, ist es zweckmäßig, mehrere Blasen 1 auf einer Trägerfolie 20 anzuordnen und daran zu befestigen (siehe Figur 11). Die Befestigung der Blasen 1 an der Trägerfolie 20 kann beispielsweise dadurch erfolgen, dass an den Stirnenden 16 der Blasen 1 Fixierlaschen 21 angeformt sind, die mit der Trägerfolie 20, z.B. durch eine Hochfrequenzverschweißung oder einen Kunststoffniet 22 verbunden sind.

In der Figur 12 ist beispielhaft ein Fahrzeugsitz 200 schematisch in Seitenansicht dargestellt, der zwischen zwei Sitzstrukturen 3, 4 einen Aktor 100 in seiner Sitzfläche SI sowie in seiner Rückenlehne RL aufweist. Der Aktor weist eine Trägerfolie auf, auf der eine Vielzahl von erfindungsgemäß ausgebildeten Folienblasen wie z.B. entsprechend der Ausführungsform von Figur 4 angebracht sind.

## Patentansprüche

1. Folienblase (1), insbesondere für einen Fahrzeugsitz, mit einer oberen und einer unteren Folienwandung (OF, UF) sowie mit mindestens einer Längsschweißnaht (5), wobei die obere und die untere Folienwandung (OF, UF) im kollabierten Einbauzustand der Folienblase (1) aneinanderliegen und ein Flachgebilde formen, das durch Längsseitenränder (13) seitlich begrenzt ist,
**dadurch gekennzeichnet,**
**dass** die Längsschweißnaht (5a, 5c) der Folienblase (1) in einem Folienbereich (FB) zwischen den beiden Längsseitenrändern (13) der Folienblase (1) vorgesehen ist.

2. Folienblase nach Anspruch 1,
**dadurch gekennzeichnet,**
**dass** die Folienblase (1) im aufgeblasenen Einbauzustand ein langgestrecktes, röhrenartiges Gebilde, insbesondere flachtunnelartiges Gebilde, formt, oder eine im Wesentlichen abgeflachte Geometrieform, insbesondere quaderförmige, zylinderförmige, oder kegelige Hohlkörperform, einnimmt.

3. Folienblase nach einem der vorhergehenden Ansprüche,
**dadurch gekennzeichnet,**
**dass** die Längsschweißnaht (5a) etwa im Mittenbereich der oberen Folienwandung (OF) und/oder unteren Folienwandung (UF) zwischen den beiden Längsseitenrändern (13) der Folienblase (1) vorgesehen ist.

4. Folienblase nach einem der vorhergehenden Ansprüche,
**dadurch gekennzeichnet,**
**dass** die Längsschweißnaht (5a) derart ausgebildet und angeordnet ist, dass beim Befüllen der Folienblase (1) mit Luft eine Zugkraft (Z), die von den sich an die Längsschweißnaht (5a) anschließenden Abschnitten (8, 9) der Kunststofffolie (2a) der Folienblase (1) auf deren Längsschweißnaht (5a) ausgeübt ist, in eine Richtung wirkt, die im Wesentlichen parallel zu der von der Längsschweißnaht (5a) aufgespannten Planebene (12) verläuft.

5. Folienblase nach einem der vorhergehenden Ansprüche,
**dadurch gekennzeichnet,**
**dass** die Folienblase (1) aus einer einzigen Kunststofffolie (2a) oder aus zwei Kunststofffolien (2b, 2c) gebildet ist, die jeweils zwei Folienenden (81, 91; 82, 92) aufweisen.

6. Folienblase nach einem der vorhergehenden Ansprüche,
**dadurch gekennzeichnet,**
**dass** die Längsschweißnaht (5c) dadurch gebildet ist, dass die beiden gegenüberliegende Folienenden (8, 9) einer Kunststofffolie (2a) oder zweier Kunststofffolien (2b, 2c) mit ihren Innenseiten (10) aneinander verschweißt sind, und dass die Längsschweißnaht (5c) derart umgeklappt ist, dass sie sich entlang der Außenseite (11) der Kunststofffolie (2a; 2b, 2c) erstreckt.

7. Folienblase nach einem der Ansprüche 1 bis 5,
**dadurch gekennzeichnet,**
**dass** zwischen den zwei Folienenden (8, 9) einer Kunststofffolie (2a) oder zweier Kunststofffolien (2b, 2c) eine Längsschweißnaht (5a) dadurch gebildet ist, dass die dem Innenraum (50) der Folienblase (1) zugewandte Innenseite (10) des einen Folienendes (8) auf die dem Innenraum (50) der Folienblase (1) abgewandte Außenseite (11) des anderen Folienendes (9) aufgelegt und im Überlappungsbereich der beiden Folienenden (8, 9) eine Verschweißung vorgenommen ist.

8. Folienblase nach einem der vorhergehenden Ansprüche,
**dadurch gekennzeichnet,**
**dass** eine erste Längsschweißnaht (5a1) in der oberen, zwischen den beiden Längsseitenrändern (13) der Folienblase (1) liegenden Folienwandung (OF) der Folienblase (1) zu einer zweiten Längsschweißnaht (5a2) in der unteren, zwischen den beiden Längsseitenrändern (13) der Folienblase (1) liegenden Folienwandung (UF) der Folienblase (1) seitlich zueinander versetzt angeordnet sind.

9. Folienblase nach einem der vorhergehenden Ansprüche,
**dadurch gekennzeichnet,**
**dass** die sich quer zur Längserstreckung der Folienblase (1) erstreckenden Stirnenden (16) der Folienblase (1) unter Bildung einer Schweißnaht (5b) miteinander verschweißt sind.

10. Folienblase nach einem der vorhergehenden Ansprüche,
**dadurch gekennzeichnet,**
**dass** an den Stirnenden (16) der jeweiligen Folienblase (1) Fixierlaschen (21) zur Befestigung an einer Trägerfolie (20) angeformt sind.

11. Aktor (100) mit einer Folienblase (1) oder einer Vielzahl von Folienblasen (1), die jeweils nach einem der vorhergehenden Ansprüche ausgebildet ist oder sind.

12. Aktor nach Anspruch 11,
**dadurch gekennzeichnet,**
**dass** eine oder mehrere Folienblasen (1) auf einer Trägerfolie (20) befestigt ist oder sind.

13. Fahrzeugsitz (200) mit mindestens einem Aktor (100) nach Anspruch 11 oder 12.

14. Fahrzeugsitz nach Anspruch 13,
**dadurch gekennzeichnet,**
**dass** der Aktor (100) mit den ein oder mehreren Folienblasen (1) zwischen einer ersten und einer zweiten Sitzstruktur (3, 4) des Fahrzeugsitzes (200) angeordnet ist.
